# EUROPEAN PATENT APPLICATION

(11) **EP 3 940 531 A1**
(43) Date of publication of application: **19.01.2022**
(21) Application number: 21178573.8
(22) Date of filing: 09.06.2021
(51) Int. Cl.: G06F 9/38, G06F 9/30

(54) **APPARATUS AND METHOD FOR WRITING BACK INSTRUCTION EXECUTION RESULT AND PROCESSING APPARATUS**

(30) Priority: 15.07.2020 CN 202010681665
(71) Applicant: KunlunXin Technology (Beijing) Company Limited, Haidian District Beijing 100101 (CN)
(72) Inventor: XU, Yingnan, Beijing (CN); DU, Xueliang, Beijing (CN)
(74) Representative: Zimmermann, Tankred Klaus

(57) **Abstract**

The invention discloses an apparatus and method for writing back an instruction execution result. The apparatus includes: a first writing port (210), coupled between a first execution unit with a first execution delay and a register file, and configured to receive a first execution result from the first execution unit, and to write the first execution result back to a first register unit in the register file based on a first writing address; and a second writing port (212), coupled between a second execution unit with a second execution delay different from the first execution delay and the register file, and configured to receive a second execution result from the second execution unit, and to write the second execution result back to a second register unit in the register file based on a second writing address.

## Description

### TECHNICAL FIELD

The present disclosure relates to computer technology, and more specifically to processor technology.

### BACKGROUND

In a processor, the instruction pipeline is usually used in order to improve the efficiency of executing instructions by the processor. Instruction pipeline refers to the division of the operation of an instruction into multiple steps, and each step is completed by a dedicated circuit unit. The instruction pipeline is usually divided into stages including instruction fetching (IF), decoding (ID), execution (EXE), writing back (WB) and other stages. In the processor core where instructions are issued sequentially, partially executed out of order, and written back out of order, one instruction is fetched in each cycle in IF stage. In the EXE stage, the instruction enters the execution unit corresponding to the execution delay according to different functions. The execution unit executes an instruction in each cycle, and the final calculation or execution result is written back to the register file out of order. Improving write-back efficiency in the instruction pipeline is critical to improving the overall performance of the processor.

### SUMMARY

An apparatus and a method for writing back an instruction execution result, a processing apparatus, an electronic device and a medium are provided in the present disclosure.

According to a first aspect, an apparatus for writing back an instruction execution result is provided. The apparatus includes: a first writing port, coupled between a first execution unit with a first execution delay and a register file, and configured to receive a first execution result from the first execution unit, and to write the first execution result back to a first register unit in the register file based on a first writing address; and a second writing port, coupled between a second execution unit with a second execution delay different from the first execution delay and the register file, and configured to receive a second execution result from the second execution unit, and to write the second execution result back to a second register unit in the register file based on a second writing address; in which the first writing port is not coupled to the second execution unit, and the second writing port is not coupled to the first execution unit.

In some embodiments, the first writing port is coupled to all register units in the register file, and the second writing port is coupled to all register units in the register file.

In some embodiments, the apparatus also includes a third writing port, coupled between the register file and a third execution unit with a third execution delay different from the first execution delay and the second execution delay, and configured to receive a third execution result from the third execution unit, and to write the third execution result back to a third register unit in the register file based on a third writing address; in which the third writing port is not coupled to the first execution unit and the second execution unit, and the third writing port is coupled to all register units in the register file,

In some embodiments, the first writing port is further coupled between a fourth execution unit with a fourth execution delay and the register file, and is further configured to receive a fourth execution result from the fourth execution unit, and to write the fourth execution result back to a fourth register unit in the register file based on a fourth writing address, and the fourth execution delay is substantially the same as the first execution delay.

In some embodiments, the apparatus also includes: a cache unit, coupled to a fifth execution unit with a fifth execution delay different from the first execution delay and the second execution delay, and configured to receive a fifth execution result from the fifth execution unit; and a multiplexer, coupled between the cache unit and the second writing port, and configured to receive the fifth execution result from the cache unit, and transmit the fifth execution result to the second writing port based on a selection signal, so as to cause the second writing port writing the fifth execution result back to a fifth register unit in the register file based on a fifth writing address, in which the second writing port is coupled to the second execution unit via the multiplexer.

According to another aspect, a processing apparatus is provided. The apparatus includes: a register file, including a plurality of register units; a plurality of execution units, configured to execute instructions respectively and output execution results with execution delays; and a plurality of writing ports, in which each writing port is configured to be coupled between an execution unit with a corresponding execution delay and the plurality of register units according to the execution delays of the plurality of execution units, to receive an execution result from the execution unit with the corresponding execution delay, and to write the execution result back to any one of the plurality of register units corresponding to a writing address.

In some embodiments, the execution delays of the plurality of execution units are different from each other, and each writing port is coupled to an execution unit of the plurality of execution units.

In some embodiments, at least two of the execution delays of the plurality of execution units are equal to a preset delay value, and a writing port of the plurality of writing ports is coupled to at least two execution units with the at least two execution delays among the plurality of execution units.

In some embodiments, the apparatus also includes: a cache unit, coupled to a first execution unit with a first execution delay among the plurality of execution units, and configured to receive a first execution result from the first execution unit; and a multiplexer, coupled between the cache unit and a first writing port of the plurality of writing ports, and configured to receive the first execution result from the cache unit, and transmitting the first execution result to the first writing port based on a selection signal, in which the multiplexer is further coupled to a second execution unit with a second execution delay different from the first execution delay among the plurality of execution units, and is configured to receiving a second execution result from the second execution unit, and to transmit the second execution result to the first writing port based on the selection signal.

According to another aspect, a method for writing back an instruction execution result is provided. The method includes: receiving, via a first writing port, a first execution result from a first execution unit with a first execution delay, and writing the first execution result back to a first register unit in a register file based on a first writing address; and receiving, via a second writing port, a second execution result from a second execution unit with a second execution delay different from the first execution delay, and writing the second execution result back to a second register unit in the register file based on a second writing address; in which the first writing port is not coupled to the second execution unit, and the second writing port is not coupled to the first execution unit.

In some embodiments, the method also includes: receiving, via a third writing port, a third execution result from a third execution unit with a third execution delay different from the first execution delay and the second execution delay, and writing the third execution result back to a third register unit in the register file based on a third writing address; in which the third writing port is not coupled to the first execution unit and the second execution unit, and the third writing port is coupled to all register units in the register file.

In some embodiments, the method also includes: receiving, via the first writing port, a fourth execution result from a fourth execution unit with a fourth execution delay, and to write the fourth execution result back to a fourth register unit in the register file based on a fourth writing address, in which the fourth execution delay is substantially the same as the first execution delay.

In some embodiments, the method also includes: receiving, via a cache unit, a fifth execution result from a fifth execution unit with a fifth execution delay different from the first execution delay and the second execution delay; and receiving, via a multiplexer, the fifth execution result from the cache unit, and transmitting the fifth execution result to the second writing port based on a selection signal, so as to cause the second writing port writing the fifth execution result back to a fifth register unit in the register file based on a fifth writing address, in which the second writing port is coupled to the second execution unit via the multiplexer.

According to another aspect, an electronic device is provided. The electronic device includes: at least one processor; and a memory communicatively coupled with the at least one processor, in which the memory stores instructions executable by the at least one processor, and the instructions are executed by the at least one processor to cause the at least one processor executing the above method.

According to another aspect, a non-transitory computer-readable storage medium storing computer instructions is provided, in which the computer instructions are executed to cause a computer to implement the above method.

The technical solution according to the embodiment of the present disclosure solves the problems caused by setting a cache unit for the write port in the instruction pipeline and adding a feedback path, which can reduce pipeline blockage, significantly improve pipeline efficiency, reduce resource overhead, reduce timing pressure, and improve the processor frequency, thereby improving the performance of the entire processor.

It should be understood that, the content described in the part is not intended to identify key or important features of embodiments of the present disclosure, nor intended to limit the scope of the present disclosure. Other features of the present disclosure will be easy to understand through the following specification.

### BRIEF DESCRIPTION OF THE DRAWINGS

The drawings are intended to better understand the solution, and do not constitute a limitation to the disclosure.
Figs. 1A and 1B are block diagrams of an apparatus for writing back an instruction execution result according to a conventional scheme;
Fig. 2 is a block diagram of an apparatus for writing back an instruction execution result according to an embodiment of the present disclosure;
Fig. 3 is a block diagram of an apparatus for writing back an instruction execution result according to an embodiment of the present disclosure;
Fig. 4 is a block diagram of an apparatus for writing back an instruction execution result according to an embodiment of the present disclosure;
Fig. 5 is a block diagram of an apparatus for writing back an instruction execution result according to an embodiment of the present disclosure;
Fig. 6 is a flowchart of a method for writing back an instruction execution result according to an embodiment of the present disclosure; and
Fig. 7 is a block diagram of an electronic device for writing back an instruction execution result according to an embodiment of the present disclosure.

### DETAILED DESCRIPTION

The exemplary embodiments of the present disclosure are described as below with reference to the accompanying drawings, which include various details of embodiments of the present disclosure to facilitate understanding, and should be considered as merely exemplary. Therefore, those skilled in the art should realize that various changes and modifications may be made to the embodiments described herein without departing from the scope and spirit of the present disclosure. Similarly, for clarity and conciseness, descriptions of well-known functions and structures are omitted in the following descriptions.

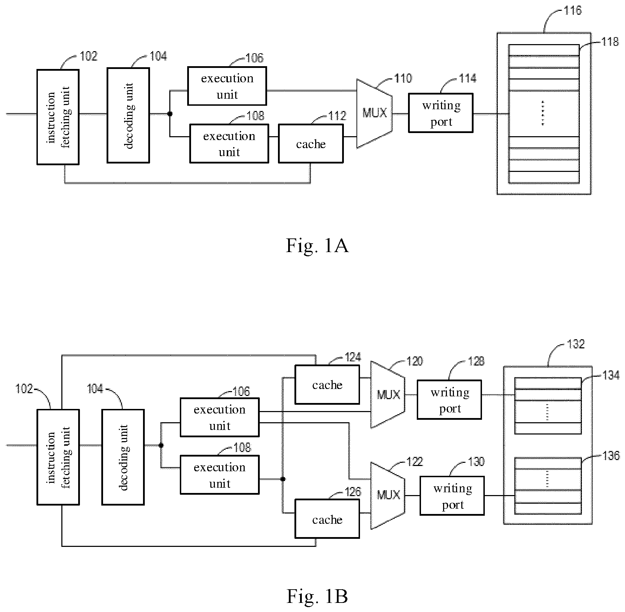

Figs. 1A and 1B are block diagrams of an apparatus for writing back an instruction execution result according to a conventional scheme.

Referring to Fig. 1A, the processor includes an instruction fetching unit 102, a decoding unit 104, execution units 106, 108, a writing port 114, and a register file 116. The instruction fetching unit 102 fetches the instruction, the decoding unit 104 decodes the fetched instruction, the execution units 106 and 108 execute the decoded instruction to output an execution result, and the execution result is written back to the register file 116 via the writing port 114. The writing port 114 can access the register unit 118 in the register file 116 based on the writing address.

In the solution shown in Fig. 1A, one register file 116 uses one writing port 114. For a single-shot processor, one execution result is written back in the writing back stage per cycle on average, and the corresponding register file 116 uses a writing port 116. When the execution results of different execution units 106 and 108 are written back to the register file 116, because the execution delays of different execution units 106 and 108 are different, conflicts may occur when the execution results are written back to the register file 116 at the same time. In order to deal with such conflicts, in the writing back stage, an N-1 arbitration logic or multiplexer (MUX) 110 is set, where N is the number of execution units. Different priority levels are assigned to different execution units 106 and 108, and a cache queue 112 is set for the execution unit 108 to push the execution results that are not currently written back into the cache queue 112, and the execution results are waited to be written back after the writing port 114 is free. The space of the buffer queue 112 is limited. In order to avoid buffer overflow, it is necessary to monitor the space margin of the buffer queue 112 at all times and feed it back to the instruction fetching unit 102 in the pre-stage of the pipeline. When the space of the cache queue 112 is full, the instruction fetching unit 102 suspends the instruction fetch until the execution result in the cache queue 112 is written back and the space is released.

Referring to Fig. 1B, the processor includes an instruction fetching unit 102, a decoding unit 104, execution units 106 and 108, writing ports 128 and 130, and a register file 132. The instruction fetching unit 102 fetches the instruction, the decoding unit 104 decodes the fetched instruction, the execution units 106 and 108 execute the decoded instruction to output the execution result, and the execution result is written back to the register file 132 via the writing ports 128 and 130. The writing port 128 can access the register unit 134 of the first area of the register file 132 based on the writing address, and the writing port 130 can access the register unit 136 of the second area of the register file 132 based on the writing address.

In the solution shown in FIG. 1B, one register file 132 uses multiple writing ports 128 and 130. Each of the writing ports 128 and 130 is shared by multiple execution units 106 and 108. After the number of writing ports used for the register file 132 is increased, compared with the above conventional solution, the arbitration logic or multiplexers (MUX) 120, 122 become an N-M cross structure, where M represents the number of writing ports. Different execution units 106, 108 are given different priorities, and cache queues 124, 126 are set for the execution unit 108 to push the execution results that are not currently written back into the cache queues 124, 126, while the execution result is waited to be written back after the writing ports 128 and 130 are free. The space of the buffer queues 124 and 126 is limited. In order to avoid buffer overflow, it is necessary to monitor the space margin of the buffer queues 124 and 126 in real time, which should be fed back to the instruction fetching unit 102 in the pre-stage of the pipeline. The writing ports 128 and 130 for the register file 132 can respectively access different register spaces. This traditional solution has a performance optimization effect for the scenario where the write-back addresses of different functional units 106, 108 are scattered on different writing ports 128, 130, but if the write-back addresses are the same, the performance is not improved, and the use of cache queues and feedback logic is also inevitable.

In the solution shown in Fig. 1A, the pipeline efficiency depends on the priority setting of different execution units. The priority selection strategy has no optimal solution, and can only achieve the desired effect for some applications. However, for other applications, the frequent full state of the cache queue may be triggered to back-pressure the fetching stage of the pipeline, so it is difficult to guarantee the overall efficiency of the pipeline. In order to ensure the correctness of resources, the set cache queue is a major resource overhead, and the wiring of the backpressure pipeline feedback path also has a negative impact on the timing and frequency of the processor.

Compared with the solution shown in Fig. 1A, the solution shown in Fig. 1B has performance optimization for scenarios where the write-back addresses of different execution units are different. However, in other cases, the solution shown in Fig. 1B also needs to set up a buffer queue and a feedback path. The depth of the cache queue may be relatively small, but it cannot be completely eliminated, so the optimization space is limited in terms of resources and efficiency.

For a specific processor, the delay characteristics of execution units of different functions in the pipeline are more obvious. In view of these execution delay characteristics, reasonable allocation of resources and improvement of the write-back efficiency of different functional pipelines are critical to improving the overall performance of the processor.

At least in order to solve the above-mentioned problems, the embodiments of the present disclosure provide a solution to improve the write-back efficiency in the instruction pipeline. According to an embodiment of the present disclosure, multiple writing ports are provided for one register file, and the multiple writing ports respectively correspond to execution units with respective execution delays. Multiple writing ports are divided and allocated to respective execution units with corresponding execution delays, and each writing port can access any register unit in the register file based on the writing address. Through this writing port and channel configuration, performance improvements and enhancements will be obtained.

According to the embodiments of the present disclosure, it is possible to reduce pipeline blockage caused by write back, significantly improve pipeline efficiency, and thereby improve the performance of the entire processor. Moreover, the embodiments of the present disclosure avoid the use of the cache queue required to ensure correctness in the traditional solution, and reduce the resource overhead, especially in a scenario where the register bits are wide, which can greatly reduce the use of hardware resources. Therefore, the embodiments of the present disclosure are beneficial to the reduction of the processor area and the reduction of power consumption. In addition, the embodiments of the present disclosure eliminate the feedback path related to the cache queue, thereby reducing the pressure of timing processing and increasing the frequency of the processor.

Hereinafter, various exemplary embodiments of the present disclosure will be described in detail with reference to various embodiments in conjunction with the accompanying drawings.

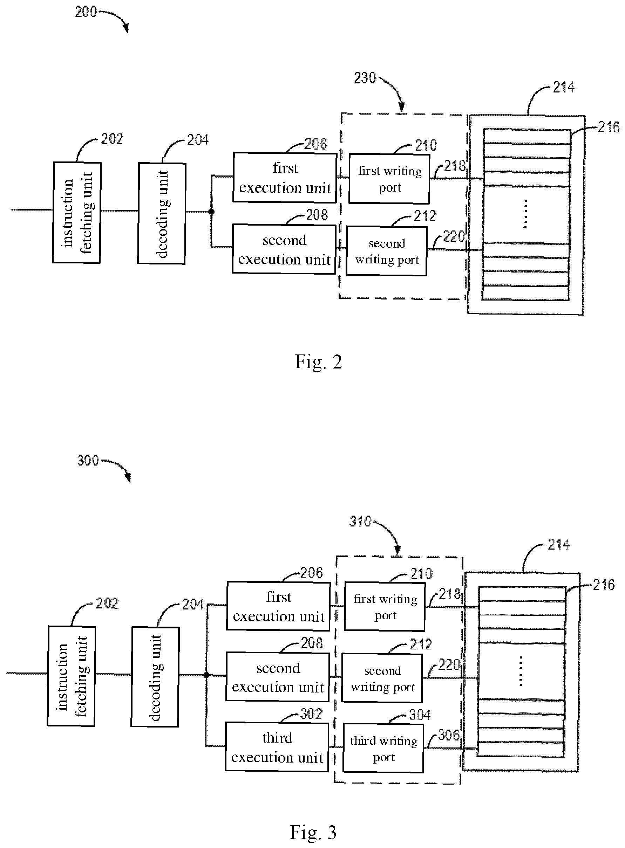

Fig. 2 is a block diagram of an apparatus for writing back an instruction execution result according to an embodiment of the present disclosure. Fig. 2 shows a processing apparatus 200 for instruction pipeline, which includes the apparatus 230 for writing back an instruction execution result. In some embodiments, the processing apparatus 200 may further include a first execution unit 206, a second execution unit 208, and a register file 214. In some embodiments, the processing apparatus 200 may further include an instruction fetching unit 202 and a decoding unit 204.

The fetching unit 202 is configured to fetch instructions. The decoding unit 204 is configured to decode the fetched instruction. The decoded instructions of different types are respectively input to corresponding execution units of different functions.

The first execution unit 206 is configured to receive the decoded first type of instruction and execute the instruction. The first execution unit 206 is configured to output the first execution result with a first execution delay. The second execution unit 208 is configured to receive the decoded second type of instruction and execute the instruction. The second execution unit 208 is configured to output the second execution result with the second execution delay. The first execution delay is different from the second execution delay. Those skilled in the art can understand that the "first execution delay is different from the second execution delay" in the present disclosure means that there is a significant difference between the first execution delay and the second execution delay, so that the write-back of the first execution result may be occurred in the same cycle of the write-back of the second execution result.

It should be understood that the instruction fetching unit 202, the decoding unit 204, the first execution unit 206, and the second execution unit 208 are circuit units corresponding to the instruction fetching, decoding, and execution stages of the instruction pipeline, respectively. These circuit units are known in the art, and detailed descriptions are omitted here.

Referring to Fig. 2, the apparatus 230 for writing back the execution result of an instruction includes a first writing port 210 and a second writing port 212. The first writing port 210 and the second writing port 212 correspond to a first execution unit 206 with a first execution delay and a second execution unit 208 with a second execution delay, respectively. The first writing port 210 is not coupled to the second execution unit 208, and the second writing port 212 is not coupled to the first execution unit 206. In some embodiments, the first writing port 210 is allocated to the first execution unit 206. In some embodiments, the second writing port 212 is assigned to the second execution unit 208. In some embodiments, the first writing port 210 is exclusively shared by the first execution unit 206, and the second writing port 212 is exclusively shared by the second execution unit 208.

The first writing port 210 is coupled between the first execution unit 206 having a first execution delay and the register file 214. The first writing port 210 is configured to receive the first execution result from the first execution unit 206 and write the first execution result back to the first register unit in the register file 214 based on the first writing address. The first writing port 210 is coupled to all register units 216 in the register file 214 via a first path 218. The first path 218 includes a first wiring set, and each wiring of the first wiring set is respectively coupled between the first writing port 210 and all the register cells 216 in the register file 214. Therefore, any register unit 216 in the register file 214 can be directly accessed via the first writing port 210. In this way, the instruction execution result output with the first execution delay can be directly written back to any register unit 216 in the register file 214 via the first writing port 210, thereby improving the write-back efficiency.

The second writing port 212 is coupled between the second execution unit 208 having a second execution delay and the register file 214. The second writing port 212 is configured to receive the second execution result from the second execution unit 208 and write the second execution result back to the second register unit in the register file 214 based on the second writing address. The second writing port 212 is coupled to all the register units 216 in the register file 214 via the second path 220. The second path 220 includes a second wiring set, and each wiring of the second wiring set is respectively coupled between the second writing port 212 and all the register cells 216 in the register file 214. Therefore, any register unit 216 in the register file 214 can be directly accessed via the second writing port 212. In this way, the instruction execution result output with the second execution delay can be directly written back to any register unit 216 in the register file 214 via the second writing port 212, thereby improving the write-back efficiency.

In some embodiments, the processing apparatus 200 may include multiple execution units, and the apparatus 230 may include multiple writing ports. The multiple execution units are configured to execute instructions respectively, and respectively output execution results with execution delays. The multiple writing ports are configured to respectively correspond to the execution delays of the multiple execution units. Multiple writing ports are respectively allocated to execution units with corresponding execution delays. Each writing port is coupled between an execution unit with corresponding execution delay and a plurality of register units according to the execution delay of the execution unit. Each writing port is configured to receive an execution result from an execution unit with a corresponding execution delay, and write the execution result back to any one of the plurality of register units corresponding to the writing address.

According to the embodiments of the present disclosure, in a processor core where instructions are issued sequentially, partially executed out of order, and written back out of order, one instruction is fetched in each cycle in the instruction fetching stage, and the instruction has a certain value during the execution stage. The execution unit of the execution delay is executed, and the instruction execution result is written back to the register file via the writing port corresponding to the execution delay. Since one instruction is executed in each cycle, and each writing port is assigned to an execution unit with a corresponding execution delay, there is no conflict problem of simultaneous input of multiple instruction execution results for each writing port. In this way, it is possible to avoid the use of arbitration logic or multiplexers, buffer queues, and feedback paths that are necessary in traditional solutions. In this way, the pipeline block is reduced, and the pipeline efficiency is significantly improved, thereby improving the performance of the entire processor; avoiding the use of cache space and reducing resource overhead, especially in the scene of large register bits, the reduction of hardware resources is greater, and there may be a positive effect on the processor area power consumption; and the feedback path related to the cache space is eliminated, the timing pressure is reduced, and the processor frequency is increased.

In addition, for the conflict problem of writing a register unit at the same time, the known processor structures in the art, such as sequential launch, partial out-of-order execution, and out-of-order return, all have a hardware processing structure that detects conflicts and avoids conflicts. This conflict problem can be avoided in the decoding stage. In the embodiments of the present disclosure, the processing logic in the solutions known in the art can be directly applied to avoid the correctness problem of multiple writing ports simultaneously writing back to the register unit of the same address without additional processing structure.

Fig. 3 is a block diagram of an apparatus for writing back an instruction execution result according to an embodiment of the present disclosure. Fig. 3 shows a processing apparatus 300 for instruction pipeline, which includes an apparatus 310 for writing back instruction execution results. In some embodiments, compared with the processing apparatus 200, the processing apparatus 300 may further include a third execution unit 302. In some embodiments, compared with the apparatus 230, the apparatus 310 may further include a third writing port 304. In some embodiments, the third writing port 304 is not coupled to the first execution unit 206 and the second execution unit 208. In some embodiments, the third writing port 304 is allocated to the third execution unit 302. In some embodiments, the third writing port 304 is exclusively shared by the third execution unit 302.

The third execution unit 302 is configured to receive the decoded third type of instruction and execute the instruction. The third execution unit 302 is configured to output the third execution result with a third execution delay. The third execution delay is different from the first execution delay of the first execution unit 206 and the second execution delay of the second execution unit 208. Similarly, the above "the third execution delay is different from the first execution delay and the second execution delay" means that there is a significant difference between the third execution delay, the first execution delay and the second execution delay, so that the write-back of the third execution result may be occurred in the same cycle of the write-back of the first or the second execution result. In some embodiments, the third execution unit 302 is an execution unit that is frequently used or whose path feedback to the fetching unit 202 has a serious impact on timing.

The third writing port 304 is coupled between the third execution unit 302 and the register file 214. The third writing port 304 is configured to receive the third execution result from the third execution unit 302 and write the third execution result back to the third register unit in the register file 214 based on the third writing address. The third writing port 304 is coupled to all the register units 216 in the register file 214 via the third path 306. The third path 306 includes a third wiring set, and each wiring of the third wiring set is respectively coupled between the third writing port 304 and all the register cells 216 in the register file 214. In this way, any register unit 216 in the register file 214 can be directly accessed via the third writing port 304.

According to the embodiments of the present disclosure, for execution units that are frequently used or whose path feedback to the fetching unit has a serious impact on timing, a corresponding writing port is additionally allocated. In this way, the instruction execution result output by the third execution unit 302 can be directly written back to any register unit 216 in the register file 214 via the third writing port 304, thereby improving the write-back efficiency without affecting the timing of the processor, and improving processor performance.

In some embodiments, the processing apparatus 300 includes multiple execution units, and the execution delays of the multiple execution units are different from each other. In this case, multiple writing ports can be set, and each writing port is coupled to a corresponding one of the multiple execution units. In addition, each writing port can access any register unit in the register file.

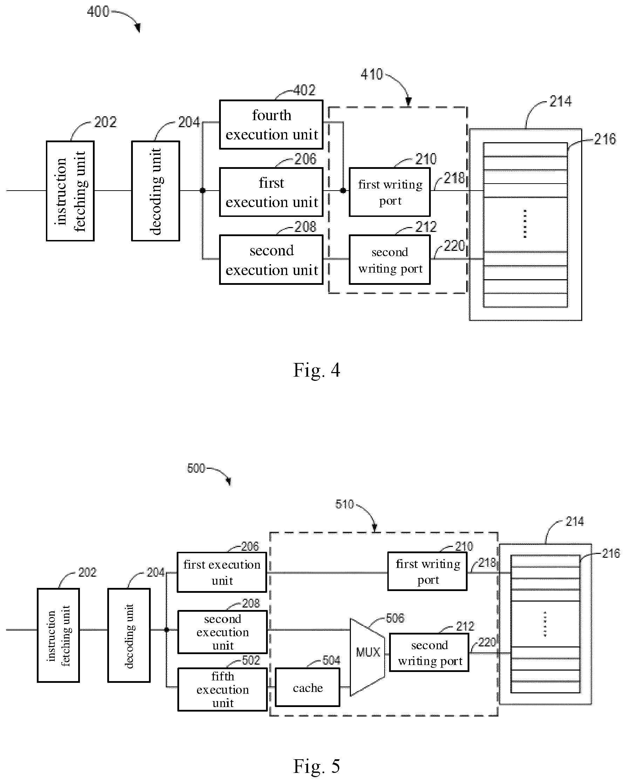

Fig. 4 is a block diagram of an apparatus for writing back an instruction execution result according to an embodiment of the present disclosure. Fig. 4 shows a processing apparatus 400 for instruction pipeline, which includes an apparatus 410 for writing back instruction execution results. In some embodiments, compared with the processing apparatus 400, the processing apparatus 400 may further include a fourth execution unit 402.

The fourth execution unit 402 is configured to receive the decoded fourth type of instruction and execute the instruction. The fourth execution unit 402 is configured to output the fourth execution result with a fourth execution delay. In some embodiments, the fourth execution delay and the first execution delay of the first execution unit 206 are substantially equal to a certain delay value. In some embodiments, the fourth execution delay is substantially equal to the first execution delay, and the difference between the fourth execution delay and the first execution delay is within a predetermined range. The size of the predetermined range may be equal to a predetermined fractional value of a cycle, such that write-back of the fourth execution result may not be occurred in the same cycle of the write-back of the first execution result. In some embodiments, the first execution unit 206 is an execution unit for integer operations, and the fourth execution unit 402 is an execution unit for floating point operations.

In some embodiments, the first writing port 210 is shared by the first execution unit 206 and the fourth execution unit 402. The first writing port 210 is further coupled between the fourth execution unit 402 with a fourth execution delay and the register file 214. The first writing port 210 is further configured to receive the fourth execution result from the fourth execution unit 402, and write the fourth execution result back to the fourth register unit in the register file 214 based on the fourth writing address.

According to an embodiment of the present disclosure, for multiple execution units with substantially the same execution delay, one writing port is shared. Since multiple execution units sharing the same writing port execute instructions in a pipeline, writing to the writing port in the same cycle does not occur, and it does not cause write-back correctness problems. In this way, the instruction execution result output by the fourth execution unit 402 can be directly written back to any register unit 216 in the register file 214 via the first writing port 210, thereby improving the write-back efficiency and the resources required for this configuration. The impact of consumption and efficiency is small, thereby improving instruction processing performance.

In some embodiments, the processing apparatus 400 includes a plurality of execution units, and at least two execution delays of the respective execution delays of the plurality of execution units are substantially equal to a specific delay value. In this case, one writing port among the plurality of writing ports is allocated to at least two execution units with the at least two execution delays among the plurality of execution units.

Fig. 5 is a block diagram of an apparatus for writing back an instruction execution result according to an embodiment of the present disclosure.

Fig. 5 shows a processing apparatus 500 for instruction pipeline, which includes an apparatus 510 for writing back instruction execution results. In some embodiments, compared with the processing apparatus 200, the processing apparatus 500 may further include a fifth execution unit 502. In some embodiments, compared with the apparatus 230, the apparatus 510 may further include a cache unit 504 and a multiplexer (MUX) 506.

The fifth execution unit 502 is configured to receive the decoded fifth type of instruction and execute the instruction. The fifth execution unit 502 is configured to output the fifth execution result with a fifth execution delay. The fifth execution delay is different from the first execution delay of the first execution unit 206 and the second execution delay of the second execution unit 208. In some embodiments, the fifth execution unit 502 is an execution unit that is used less frequently,

The cache unit 504 is coupled to the fifth execution unit 504. The cache unit 504 is configured to receive the fifth execution result from the fifth execution unit 504. In some embodiments, the cache unit 504 is a cache queue. The cache unit 504 is configured to temporarily store the fifth execution result. In some embodiments, the depth of the cache unit 504 is small. In some embodiments, there is no need to set a feedback path from the cache unit 504 to the fetching unit 202.

The multiplexer 506 is coupled between the cache unit 504 and the second writing port 212. The multiplexer 506 is configured to receive the fifth execution result from the cache unit 504, and transmit the fifth execution result to the second writing port 212 based on the selection signal, so that the second writing port 212 executes the fifth execution based on the fifth writing address. The result is written back to the fifth register unit in the register file 214. In some embodiments, the multiplexer 506 is configured to transmit the fifth execution result temporarily stored in the cache unit 504 to the second writing port 212 when the second writing port 212 is in an idle state, so as to write back the fifth execution result. In some embodiments, the multiplexer 506 may include an arbitration logic.

According to the embodiments of the present disclosure, for execution units whose use frequency is low and the feedback path does not need to be passed to the forward pipeline, a cache unit with a smaller depth is provided, and other writing ports are reused. In this way, the instruction execution result output by the fifth execution unit 504 can be written back to any register unit 216 in the register file 214 via the second writing port 212. In the case of not increasing the wiring between the writing port and the corresponding register unit, the write-back efficiency may be ensured, and the consumption of processor resources may be reduced, thereby improving processor performance.

According to the embodiments of the present disclosure, any configuration in the embodiments described above with reference to Figs. 2 to 5 can be combined with each other, so that adding the writing ports or add buffer units and multiplexers may be balanced according to the usage frequency of the execution unit, the consumption of hardware resources and the consideration of the impact on the timing, and the writing port can be shared according to the execution delay feature.

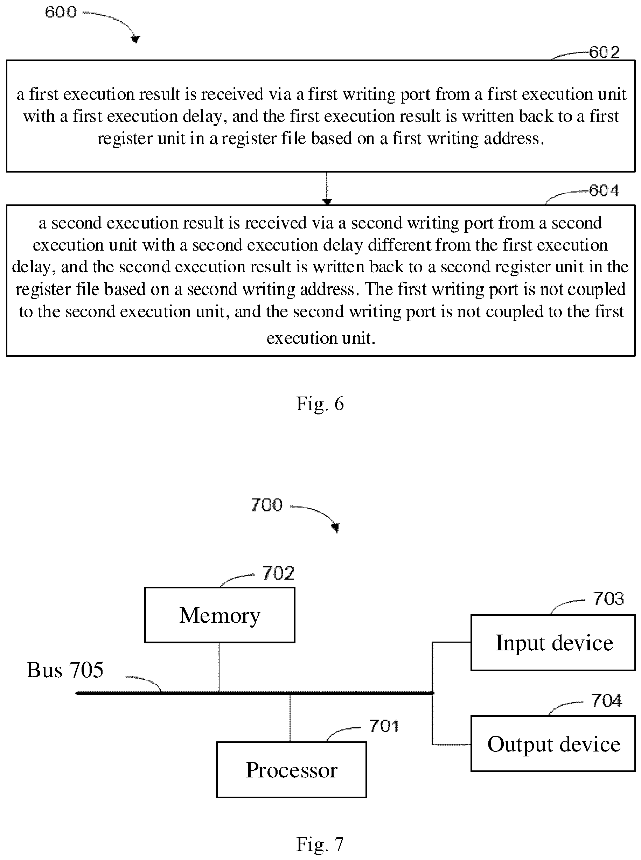

Fig. 6 is a flowchart of a method 600 for writing back an instruction execution result according to an embodiment of the present disclosure.

In block 602, a first execution result is received via a first writing port from a first execution unit with a first execution delay, and the first execution result is written back to a first register unit in a register file based on a first writing address.

In block 604, a second execution result is received via a second writing port from a second execution unit with a second execution delay different from the first execution delay, and the second execution result is written back to a second register unit in the register file based on a second writing address. The first writing port is not coupled to the second execution unit, and the second writing port is not coupled to the first execution unit.

In some embodiments, the method 600 may further include: receiving, via a third writing port, a third execution result from a third execution unit with a third execution delay different from the first execution delay and the second execution delay, and writing the third execution result back to a third register unit in the register file based on a third writing address. The third writing port is not coupled to the first execution unit and the second execution unit.

In some embodiments, the method 600 may further include: receiving, via the first writing port, a fourth execution result from a fourth execution unit with a fourth execution delay, and to write the fourth execution result back to a fourth register unit in the register file based on a fourth writing address. The difference between the fourth execution delay and the first execution delay is within a predetermined range.

In some embodiments, the method 600 may further include: receiving, via a cache unit, a fifth execution result from a fifth execution unit with a fifth execution delay different from the first execution delay and the second execution delay; and
receiving, via a multiplexer, the fifth execution result from the cache unit, and transmitting the fifth execution result to the second writing port based on a selection signal, so as to cause the second writing port writing the fifth execution result back to a fifth register unit in the register file based on a fifth writing address. The second execution result is received from the second execution unit through the second writing port via the multiplexer.

According to an embodiment of the present disclosure, an electronic device and a computer-readable storage medium are also provided. Fig. 7 is a block diagram of an electronic device for writing back an instruction execution result according to an embodiment of the present disclosure.

Electronic devices are intended to represent various forms of digital computers, such as laptop computers, desktop computers, workstations, personal digital assistants, servers, blade servers, mainframe computers, and other suitable computers. Electronic devices can also represent various forms of mobile devices, such as personal digital processing, cellular phones, smart phones, wearable devices, and other similar computing devices. The components shown herein, their connections and relationships, and their functions are merely examples, and are not intended to limit the implementation of the present disclosure described and/or required herein. In addition, the electronic device can also represent a programmable device, such as a field programmable gate array (FPGA), a programmable logic device (PLD), and the like.

As shown in Fig. 7, the electronic device 700 includes one or more processors 701, a memory 702, and an interface for connecting various components. The interface includes a high-speed interface and a low-speed interface. The various components are connected to each other using different buses, and can be installed on a common motherboard or installed in other ways as needed. The processor 701 may process instructions executed in the electronic device 700. In other embodiments, if necessary, multiple processors and/or multiple buses can be used with multiple memories. Similarly, multiple electronic devices can be connected, and each device provides part of the necessary operations (for example, as a server array, a group of blade servers, or a multiprocessor system). In Fig. 7, a processor 701 is taken as an example.

The memory 702 is a non-transitory computer-readable storage medium provided by this disclosure. The memory 702 stores instructions executable by at least one processor, so that the at least one processor executes the method for writing back an instruction execution result provided by the present disclosure. The non-transitory computer-readable storage medium of the present disclosure stores computer instructions, and the computer instructions are used to make a computer execute the method for writing back instruction execution results provided by the present disclosure.

The memory 702, as a non-transitory computer-readable storage medium, can be used to store non-transitory software programs, non-transitory computer executable programs, and modules. The processor 701 executes various functional applications and data processing of the server by running non-transitory software programs, instructions, and modules stored in the memory 702, that is, implements the method for writing back instruction execution results in the foregoing method embodiments.

The memory 702 may include a storage program area and a storage data area, where the storage program area may store an operating system and application programs required for at least one function. The storage data area may store data created according to the use of the electronic device for implementing the method. In addition, the memory 702 may include a high-speed random access memory, and a non-transitory memory, such as at least one magnetic disk storage device, a flash memory device, or other non-transitory solid-state storage device. In some embodiments, the memory 702 may optionally include a memory remotely disposed with respect to the processor 701, and these remote memories may be connected to the electronic device for implementing the method through a network. Examples of the above network include, but are not limited to, the Internet, an intranet, a local area network, a mobile communication network, and combinations thereof.

The electronic device 700 may further include: an input device 703 and an output device 704. The processor 701, the memory 702, the input device 703, and the output device 704 may be connected through a bus 705 or in other ways. In Fig. 7, the connection through the bus 705 is taken as an example. The input device 703 can receive input information to be processed. The output device 704 can output the processed information.

Various implementations of the systems and techniques described herein can be implemented in digital electronic circuit systems, integrated circuit systems, application specific integrated circuits, programmable devices, computer hardware, firmware, software, and/or combinations thereof. These various embodiments may include: being implemented in one or more computer programs, the one or more computer programs may be executed and/or interpreted on a programmable system including at least one programmable processor. The programmable processor can be a dedicated or general-purpose programmable processor that can receive data and instructions from the storage system, at least one input device, and at least one output device, and may transmit the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, sound input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host. The server is a host product in a cloud computing service system to solve difficult management and poor business expansion of traditional physical hosting and VPS services.

According to the technical solution of the embodiment of the present disclosure, multiple writing ports are provided for the register file, and the multiple writing ports respectively correspond to the execution delays of the multiple execution units and are respectively allocated to the execution units with corresponding execution delays. In this way, while ensuring that no write conflicts due to execution delays occur, the efficiency of writing back the execution result of the instruction is improved.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

## Claims

1. An apparatus for writing back an instruction execution result, comprising:
a first writing port (210), coupled between a first execution unit (206) with a first execution delay and a register file, and configured to receive a first execution result from the first execution unit (206), and to write the first execution result back to a first register unit in the register file (214) based on a first writing address; and
a second writing port (212), coupled between a second execution unit (208) with a second execution delay different from the first execution delay and the register file (214), and configured to receive a second execution result from the second execution unit (208), and to write the second execution result back to a second register unit in the register file (214) based on a second writing address;
wherein the first writing port (210) is not coupled to the second execution unit (208), and the second writing port (212) is not coupled to the first execution unit (206).

2. The apparatus of claim 1, wherein the first writing port (210) is coupled to all register units in the register file (214), and the second writing port (212) is coupled to all register units in the register file (214).

3. The apparatus of claim 1 or 2, further comprising:
a third writing port (304), coupled between the register file (214) and a third execution unit (302) with a third execution delay different from the first execution delay and the second execution delay, and configured to receive a third execution result from the third execution unit (302), and to write the third execution result back to a third register unit in the register file (214) based on a third writing address;
wherein the third writing port (304) is not coupled to the first execution unit (206) and the second execution unit (208), and the third writing port (304) is coupled to all register units in the register file (214).

4. The apparatus of any of claims 1-3, wherein the first writing port (210) is further coupled between a fourth execution unit (402) with a fourth execution delay and the register file (214), and is further configured to receive a fourth execution result from the fourth execution unit (402), and to write the fourth execution result back to a fourth register unit in the register file (214) based on a fourth writing address, and
the fourth execution delay is substantially the same as the first execution delay.

5. The apparatus of any of claims 1-4, further comprising:
a cache unit, coupled to a fifth execution unit (502) with a fifth execution delay different from the first execution delay and the second execution delay, and configured to receive a fifth execution result from the fifth execution unit (502); and
a multiplexer, coupled between the cache unit and the second writing port (212), and configured to receive the fifth execution result from the cache unit, and transmit the fifth execution result to the second writing port (212) based on a selection signal, so as to cause the second writing port (212) writing the fifth execution result back to a fifth register unit in the register file (214) based on a fifth writing address,
wherein the second writing port (212) is coupled to the second execution unit (208) via the multiplexer.

6. A processing apparatus, including:
a register file, comprising a plurality of register units;
a plurality of execution units, configured to execute instructions respectively and output execution results with execution delays; and
a plurality of writing ports, wherein each writing port is configured to be coupled between an execution unit with a corresponding execution delay and the plurality of register units according to the execution delays of the plurality of execution units, to receive an execution result from the execution unit with the corresponding execution delay, and to write the execution result back to any one of the plurality of register units corresponding to a writing address.

7. The processing apparatus of claim 6, wherein the execution delays of the plurality of execution units are different from each other, and each writing port is coupled to an execution unit of the plurality of execution units.

8. The processing apparatus of claim 6 or 7, wherein at least two of the execution delays of the plurality of execution units are equal to a preset delay value, and a writing port of the plurality of writing ports is coupled to at least two execution units with the at least two execution delays among the plurality of execution units.

9. The processing apparatus of any of claims 6-8, further comprising:
a cache unit, coupled to a first execution unit (206) with a first execution delay among the plurality of execution units, and configured to receive a first execution result from the first execution unit (206); and
a multiplexer, coupled between the cache unit and a first writing port (210) of the plurality of writing ports, and configured to receive the first execution result from the cache unit, and transmitting the first execution result to the first writing port (210) based on a selection signal,
wherein the multiplexer is further coupled to a second execution unit (208) with a second execution delay different from the first execution delay among the plurality of execution units, and is configured to receiving a second execution result from the second execution unit (208), and to transmit the second execution result to the first writing port (210) based on the selection signal.

10. A method for writing back an instruction execution result, comprising:
receiving (602), via a first writing port, a first execution result from a first execution unit with a first execution delay, and writing the first execution result back to a first register unit in a register file based on a first writing address; and
receiving (604), via a second writing port, a second execution result from a second execution unit with a second execution delay different from the first execution delay, and writing the second execution result back to a second register unit in the register file based on a second writing address;
wherein the first writing port is not coupled to the second execution unit, and the second writing port is not coupled to the first execution unit.

11. The method of claim 10, further comprising:
receiving, via a third writing port, a third execution result from a third execution unit with a third execution delay different from the first execution delay and the second execution delay, and writing the third execution result back to a third register unit in the register file based on a third writing address;
wherein the third writing port is not coupled to the first execution unit and the second execution unit, and the third writing port is coupled to all register units in the register file.

12. The method of claim 10 or 11, further comprising:
receiving, via the first writing port, a fourth execution result from a fourth execution unit with a fourth execution delay, and to write the fourth execution result back to a fourth register unit in the register file based on a fourth writing address,
wherein the fourth execution delay is substantially the same as the first execution delay.

13. The method of any of claims 10-12, further comprising:
receiving, via a cache unit, a fifth execution result from a fifth execution unit with a fifth execution delay different from the first execution delay and the second execution delay; and
receiving, via a multiplexer, the fifth execution result from the cache unit, and transmitting the fifth execution result to the second writing port based on a selection signal, so as to cause the second writing port writing the fifth execution result back to a fifth register unit in the register file based on a fifth writing address,
wherein the second writing port is coupled to the second execution unit via the multiplexer.

14. An electronic device, comprising:
at least one processor; and
a memory communicatively coupled with the at least one processor,
wherein the memory stores instructions executable by the at least one processor, and the instructions are executed by the at least one processor to cause the at least one processor executing the method of any one of claims 10 to 13.

15. A non-transitory computer-readable storage medium storing computer instructions, wherein the computer instructions are executed to cause a computer to implement the method of any one of claims 10 to 13.
